# FASCICULE DE BREVET EUROPEEN

(11) **EP 4 341 131 B1**
(45) Date de publication et mention de la délivrance du brevet: **11.03.2026**
(21) Numéro de dépôt: 22717854.8
(22) Date de dépôt: 23.03.2022
(51) Int. Cl.: B60R 19/18

(54) **DISPOSITIF D'ABSORPTION À CORDONS DE SOUDURE À SOLLICITATION RÉDUITE, POUR UN VÉHICULE TERRESTRE**
ABSORPTIONSVORRICHTUNG MIT SPANNUNGSARMEN SCHWEISSNÄHTEN FÜR LANDFAHRZEUGE
ABSORPTION DEVICE WITH REDUCED STRESS WELD SEAMS, FOR A LAND VEHICLE

(30) Priorité: 20.05.2021 FR 2105291
(43) Date de publication de la demande: 27.03.2024
(73) Titulaire: Stellantis Auto SAS, 78300 Poissy (FR)
(72) Inventeur: PERON, Rodolphe, 95220 HERBLAY (FR); ROYER, Guillaume, 91680 BRUYERES LE CHATEL (FR)
(74) Mandataire: BCIP
(86) Numéro de dépôt international: PCT/FR2022/050532
(87) Numéro de publication internationale: WO 2022/243612

(56) Documents cités:
- WO-A1-2021/021842
- FR-A1- 3 093 045
- KR-A- 20100 034 485

## Description

### Domaine technique de l'invention

L'invention concerne les véhicules terrestres, et plus précisément les dispositifs d'absorption qui sont destinés à équiper des parties avant ou arrière de véhicules terrestres.

### Etat de la technique

Certains véhicules terrestres, généralement de type automobile, comprennent une partie avant et/ou une partie arrière comportant un dispositif d'absorption de choc masqué par un pare-chocs ou un bouclier. Ce dispositif d'absorption comprend une traverse (ou poutre) installée transversalement et à laquelle sont solidarisés fixement deux absorbeurs d'énergie ayant des extrémités couplées au véhicule. En cas de choc subi par la traverse, ces absorbeurs d'énergie sont agencés de manière à comprimer leur matière suivant la direction longitudinale du véhicule, généralement en formant des plis, afin d'absorber une partie au moins de l'énergie de ce choc.

Certains de ces dispositifs d'absorption comprennent une traverse comportant des extrémités droite et gauche opposées et auxquelles sont solidarisées par soudage et respectivement des plaques externes cintrées. Ces dernières sont destinées non seulement à augmenter le ceintrage de la traverse au niveau de ses extrémités opposées, mais aussi à encaisser à la place de la traverse certains chocs latéraux dits « de réparabilité » survenant à faible vitesse (typiquement inférieure à 20 km/h) et sous une faible incidence (typiquement selon un angle de 10° par rapport à la direction longitudinale du véhicule).

Actuellement, chaque plaque externe comprend une partie supérieure qui s'étend vers le haut au-delà de la face supérieure de l'extrémité correspondante de la traverse, et donc est soudée par des cordons de soudure définis sur cette face supérieure à proximité immédiate de l'arête qui est située à l'interface entre la face supérieure et la face avant de l'extrémité correspondante de la traverse. Par conséquent, en cas de choc subi par une plaque externe les cordons de soudure sont fortement sollicités, ce qui peut les arracher et donc empêcher cette plaque externe d'assurer correctement sa fonction.

Par ailleurs, dans certains véhicules deux équipements sont installés respectivement au-dessus des deux plaques externes de la traverse, et lorsque ces équipements ont une extension verticale importante, il peut arriver que leur extrémité inférieure soit placée au niveau de (et devant) la partie supérieure de la plaque externe. Par conséquent, en cas de choc subi par l'un de ces équipements (par exemple lors d'une collision avec le fémur d'une personne), cet équipement ne peut pas être entraîné en rotation en direction des absorbeurs d'énergie car cette rotation est empêchée par la partie supérieure de la plaque externe voisine. Il en résulte non seulement une forte sollicitation des cordons de soudure qui peut les arracher et donc empêcher la plaque externe concernée d'assurer correctement sa fonction, mais aussi une destruction de l'équipement heurté et de potentiels dommages corporels du fait du blocage de la rotation de ce dernier. Le document WO2021021842 montre un dispositif d'absorption selon le préambule de la revendication 1.

L'invention a donc notamment pour but d'améliorer la situation.

### Présentation de l'invention

Elle propose notamment à cet effet un dispositif d'absorption, avec les caractéristiques de la revendication 1, destiné à équiper un véhicule et comprenant une traverse comportant des extrémités opposées et auxquelles sont solidarisées par soudage et respectivement des plaques externes cintrées et ayant chacune une partie supérieure s'étendant au-delà d'une face supérieure de l'extrémité correspondante.

Ce dispositif d'absorption se caractérise par le fait que la partie supérieure de chaque plaque externe est repliée au-dessus de la face supérieure de l'extrémité correspondante et comprend un bord solidarisé à cette face supérieure par au moins un cordon de soudure espacé par rapport à une face avant de l'extrémité correspondante afin de réduire sa sollicitation en cas de choc.

Ainsi, en cas de choc subi par une plaque externe, il y a une très faible probabilité d'arrachement de chaque cordon de soudure associé et donc une garantie quasi certaine que cette plaque externe assurera correctement sa fonction.

Le dispositif d'absorption selon l'invention peut comporter d'autres caractéristiques qui peuvent être prises séparément ou en combinaison, et notamment :
- chaque cordon de soudure peut présenter une section en forme générale de triangle rectangle ;

L'invention propose également un véhicule terrestre, avec les caractéristiques de la revendication 3, éventuellement de type automobile, et comprenant au moins un dispositif d'absorption du type de celui présenté ci-avant.

Par exemple, le véhicule peut comprendre une partie avant comportant le dispositif d'absorption. Dans ce cas, la partie avant peut aussi comprendre deux blocs optiques installés respectivement au-dessus des deux extrémités opposées de la traverse du dispositif d'absorption. A titre d'exemple, chacun de ces blocs optiques peut assurer une fonction photométrique de feu de jour (ou DRL).

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté avant, un exemple de réalisation d'un dispositif d'absorption selon l'invention, avant qu'il n'équipe une partie avant d'un véhicule,
[Fig. 2] illustre schématiquement, dans une vue en perspective du côté arrière, l'absorbeur d'énergie gauche du dispositif d'absorption de la figure 1, avec au-dessus un bloc optique, et
[Fig. 3] illustre schématiquement, dans une vue en perspective du côté avant, l'absorbeur d'énergie gauche du dispositif d'absorption de la figure 1.

### Description détaillée de l'invention

L'invention a notamment pour but de proposer un dispositif d'absorption DA destiné à être installé dans une partie avant ou arrière d'un véhicule à proximité d'un pare-chocs afin de coopérer avec ce dernier pour absorber de l'énergie en cas de choc subi par cette partie avant ou arrière.

Dans ce qui suit, on considère, à titre d'exemple non limitatif, que le dispositif d'absorption DA est destiné à faire partie d'un véhicule de type automobile, comme par exemple une voiture. Mais l'invention n'est pas limitée à ce type de véhicule. Elle concerne en effet tout véhicule terrestre comprenant une partie avant ou arrière devant comporter un dispositif d'absorption.

Par ailleurs, on considère dans ce qui suit, à titre d'exemple non limitatif, que le dispositif d'absorption DA est destiné à faire partie d'une partie avant d'un véhicule automobile. Mais le dispositif d'absorption DA peut aussi être destiné à faire partie d'une partie arrière d'un véhicule terrestre.

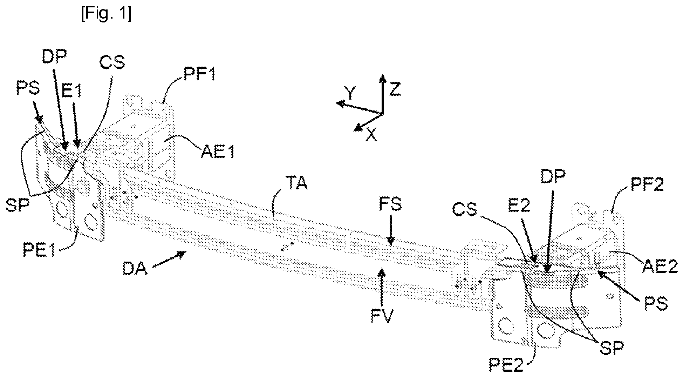

Sur les figures 1 à 3 la direction X est la direction longitudinale du véhicule V, laquelle est parallèle aux côtés latéraux comportant les portières latérales, la direction Y est la direction transversale du véhicule V, laquelle est perpendiculaire à la direction longitudinale X, et la direction Z est la direction verticale du véhicule V, laquelle est perpendiculaire aux directions longitudinale X et transversale Y.

On a schématiquement illustré sur la figure 1 un exemple de réalisation d'un dispositif d'absorption DA selon l'invention, avant qu'il ne soit installé dans une partie (ici avant) d'un véhicule (ici automobile).

Comme illustré sur la figure 1, un dispositif d'absorption DA, selon l'invention, comprend une traverse TA et deux absorbeurs d'énergie AEj droit (j = 1) et gauche (j = 2).

La traverse TA a sa plus grande extension suivant la direction transversale Y du véhicule. Elle est de préférence réalisée en métal, par exemple en acier ou en aluminium. Par ailleurs, la traverse TA comporte deux extrémités Ej (l'une droite E1 et l'autre gauche E2), opposées entre elles, et auxquelles sont solidarisées par soudage et respectivement deux plaques externes PEj cintrées. Une fois installée dans un véhicule, la traverse TA est masquée par un pare-chocs (ou bouclier) avec une face avant FV orientée vers ce dernier.

Chaque plaque externe PEj, solidarisée à l'une des extrémités Ej, est destinée à augmenter le ceintrage de la traverse TA au niveau de cette extrémité Ej et à encaisser à la place de la traverse TA certains chocs latéraux dits de réparabilité. De préférence, chaque plaque externe PEj peut être réalisée en métal, par exemple en acier ou en aluminium.

Chaque absorbeur d'énergie AEj est solidarisé fixement à l'une des deux extrémités Ej de la traverse TA, par exemple par soudage, et est destiné à être couplé au véhicule (ici à sa partie avant, de préférence à une partie structurelle). Chaque absorbeur d'énergie AEj est de préférence réalisé en métal, par exemple en acier ou en aluminium.

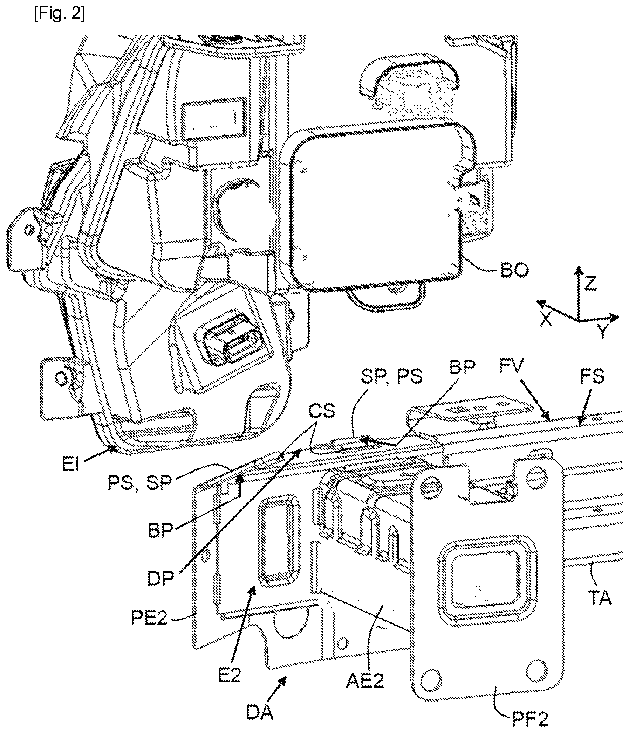

Par exemple, et comme illustré non limitativement sur les figures 1 et 2, le couplage entre chaque absorbeur d'énergie AEj et la partie (ici avant) du véhicule peut se faire via une platine de fixation PFj. Cette dernière (PFj) peut, par exemple, être soudée à l'une des extrémités de l'absorbeur d'énergie AEj associé et vissée sur la partie (ici avant) du véhicule.

Chaque absorbeur d'énergie AEj est agencé de manière à comprimer sa matière suivant la direction longitudinale X du véhicule en cas de choc subi par la traverse TA.

Comme illustré sur les figures 1 à 3, chaque plaque externe PEj a une partie supérieure PS qui s'étend vers le haut au-delà de la face supérieure FS de l'extrémité Ej correspondante de la traverse TA en étant repliée au-dessus de cette face supérieure FS. De plus, chaque partie supérieure PS repliée comprend un bord BP qui est solidarisé à la face supérieure FS de l'extrémité Ej correspondante par au moins un cordon de soudure CS. Du fait de ce repliement, chaque cordon de soudure CS est espacé par rapport à la face avant FV de l'extrémité Ej correspondante, ce qui permet de réduire sa sollicitation en cas de choc.

On comprendra en effet qu'en éloignant chaque cordon de soudure CS de l'arête qui est située à l'interface entre la face supérieure FS et la face avant FV de l'extrémité Ej correspondante, en cas de choc subi par une plaque externe PEj son bord BP exerce une pression sur chaque cordon de soudure CS sensiblement dans le plan horizontal XY et non plus dans un plan sensiblement vertical YZ, évitant ainsi à la partie supérieure PS de cette plaque externe PEj de basculer vers l'arrière (ou vers l'absorbeur d'énergie AEj voisin). Il en résulte, en cas de choc subi par une plaque externe PEj, une moindre sollicitation de chaque cordon de soudure CS qui la solidarise à la face supérieure FS, et donc une très faible probabilité d'arrachement de chaque cordon de soudure CS et par conséquent une garantie quasi certaine que cette plaque externe PEj assurera correctement sa fonction.

De plus, lorsque des équipements BO ayant une importante extension verticale (en Z) sont installés respectivement au-dessus des deux plaques externes PEj, leur extrémité inférieure EI se retrouve désormais située au-dessus de la partie supérieure PS du fait que cette dernière (PS) est repliée. Par conséquent, en cas de choc subi par l'un de ces équipements BO (par exemple lors d'une collision avec le fémur d'une personne), cet équipement BO peut être entraîné en rotation en direction de l'absorbeur d'énergie AEj voisin puisque cette rotation n'est plus empêchée par la partie supérieure PS de la plaque externe PEj voisine. Il en résulte que l'équipement BO heurté ne risque plus, d'une première part, d'être détruit par un contact avec la plaque externe PEj voisine lors de la rotation de l'équipement BO, d'une deuxième part, d'occasionner un dommage corporel, et, d'une troisième part, de solliciter chaque cordon de soudure CS de la partie supérieure PS de cette plaque externe PEj.

En outre, si le choc induit un léger déplacement de l'équipement BO vers le bas, le repliement de la partie supérieure PS de la plaque externe PEj voisine peut permettre d'offrir à l'extrémité inférieure EI de cet équipement BO une surface d'appui et de glissement facilitant sa rotation et sa remontée vers le haut.

On notera que dans l'exemple illustré non limitativement sur la figure 2 l'équipement BO est un bloc optique assurant une fonction photométrique de feu de jour (ou DRL (pour « Daytime running Light (or Lamp) » - signalisation lumineuse allumée automatiquement lorsque le véhicule est mis en fonctionnement pendant le jour)). Mais d'autres types d'équipement pourraient être installés au-dessus de chaque plaque externe PEj.

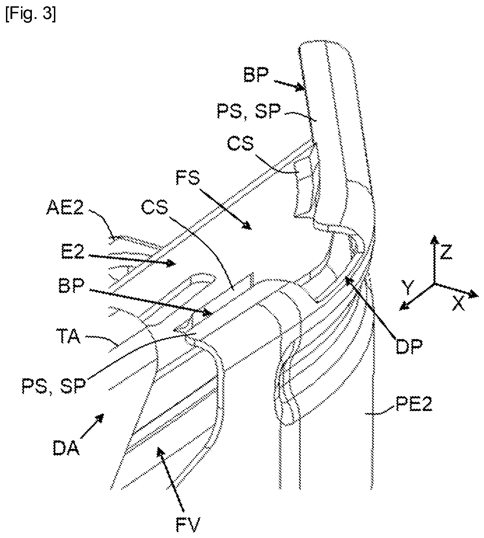

On notera également, comme illustré non limitativement sur les figures 2 et 3, que chaque cordon de soudure CS peut présenter une section en forme générale de triangle rectangle. Dans ce cas, l'angle droit (et donc la face sensiblement verticale) d'un cordon de soudure CS est situé(e) contre le bord BP de la partie supérieure PS de la plaque externe PEj concernée. Cela permet de maximiser la surface de contact de chaque cordon de soudure CS avec le bord BP concerné, et donc de définir une butée de qualité pour ce dernier (BP). Mais chaque cordon de soudure CS pourrait présenter une section ayant d'autres formes générales, et notamment en L ou en rectangle.

On notera également que dans l'exemple illustré non limitativement sur les figures 2 et 3, le bord BP de la partie supérieure PS de chaque plaque externe PEj est solidarisé à la face supérieure FS par deux cordons de soudure CS distants l'un de l'autre. Mais le nombre de cordons de soudure CS, assurant la solidarisation d'un bord BP à la face supérieure FS, peut prendre n'importe quelle valeur supérieure ou égale à un.

On notera également, comme illustré non limitativement sur les figures 1 à 3, que la partie supérieure PS de chaque plaque externe PEj peut comprendre deux sous-parties SP séparées par une découpe DP. Cette découpe DP permet avantageusement de faciliter le repliement des deux sous-parties SP sur la face supérieure FS de l'extrémité Ej correspondante.

Lorsque la partie supérieure PS de chaque plaque externe PEj comprend deux sous-parties SP, le bord BP de chaque sous-partie SP est préférentiellement solidarisé à la face supérieure FS de l'extrémité Ej correspondante par l'un des deux cordons de soudure CS. Cela permet d'optimiser la solidarisation de la partie supérieure PS de chaque plaque externe PEj à la face supérieure FS de l'extrémité Ej correspondante. Mais dans une variante non illustrée, seule l'une des deux sous-parties SP de chaque partie supérieure PS pourrait être solidarisée à la face supérieure FS de l'extrémité Ej correspondante par un cordon de soudure CS.

## Revendications

1. . Dispositif d'absorption (DA) destiné à équiper un véhicule et comprenant une traverse (TA) comportant des extrémités (Ej) opposées et auxquelles sont solidarisées par soudage et respectivement des plaques externes (PEj) cintrées et ayant chacune une partie supérieure (PS) s'étendant au-delà d'une face supérieure (FS) de l'extrémité (Ej) correspondante, chaque partie supérieure (PS) étant repliée au-dessus de ladite face supérieure (FS) de l'extrémité (Ej) correspondante et comprend un bord (BP) solidarisé à cette face supérieure (FS) par au moins un cordon de soudure (CS) espacé par rapport à une face avant (FV) de ladite extrémité (Ej) correspondante afin de réduire sa sollicitation en cas de choc, **caractérisé en ce que** chaque bord (BP) est solidarisé à ladite face supérieure (FS) par deux cordons de soudure (CS) distants l'un de l'autre, **en ce que** chaque partie supérieure (PS) comprend deux sous-parties (SP) séparées par une découpe (DP) facilitant leur repliement sur ladite face supérieure (FS) de l'extrémité (Ej) correspondante, et **en ce que** ledit bord (BP) de chaque sous-partie (SP) est solidarisé à ladite face supérieure (FS) par l'un desdits cordons de soudure (CS).

2. . Dispositif selon la revendication 1, **caractérisé en ce que** chaque cordon de soudure (CS) présente une section en forme générale de triangle rectangle.

3. . Véhicule terrestre, **caractérisé en ce qu'**il comprend au moins un dispositif d'absorption (DA) selon l'une des revendications précédentes.

4. . Véhicule selon la revendication 3, **caractérisé en ce qu'**il comprend une partie avant comportant ledit dispositif d'absorption (DA).

5. . Véhicule selon la revendication 4, **caractérisé en ce que** ladite partie avant comprend deux blocs optiques (BO) installés respectivement au-dessus desdites deux extrémités (Ej) opposées de la traverse (TA) dudit dispositif d'absorption (DA).

6. . Véhicule selon la revendication 5, **caractérisé en ce que** chacun desdits blocs optiques (BO) assure une fonction photométrique de feu de jour.

7. . Véhicule selon l'une des revendications 3 à 6, **caractérisé en ce qu'**il est de type automobile.

## Patentansprüche

1. Absorptionsvorrichtung (DA) zur Ausstattung eines Fahrzeugs mit einem Querträger (TA) mit gegenüberliegenden Enden (Ej), an denen durch Schweißen bzw. gebogene Außenplatten (PEj) befestigt sind und die jeweils einen oberen Teil (PS) aufweisen, der sich über eine Oberseite (FS) des entsprechenden Endes (Ej) hinaus erstreckt, wobei jeder obere Teil (PS) über die Oberseite (FS) des entsprechenden Endes (Ej) gefaltet ist und einen Rand (BP) aufweist, der an dieser Oberseite (FS) durch mindestens eine Schweißnaht (CS) befestigt ist, die von einer Seite beabstandet ist Vorderseite (FV) des entsprechenden Endes (Ej), um seine Belastung im Falle eines Aufpralls zu verringern, **dadurch gekennzeichnet, dass** jeder Rand (BP) mit der Oberseite (FS) durch zwei Schweißnähte (CS) verbunden ist, die voneinander beabstandet sind, dass jeder obere Teil (PS) zwei Unterteile (SP) umfasst, die durch einen Ausschnitt (DP) getrennt sind, der ihr Falten auf der Oberseite (FS) des entsprechenden Endes (Ej) erleichtert, und dass der Rand (BP) jedes Unterteils (SP) mit der Oberseite (FS) durch einen der Schweißnähte fest verbunden ist Schweißen (CS).

2. Vorrichtung nach Anspruch 1, **dadurch gekennzeichnet, dass** jede Schweißnaht (CS) einen Querschnitt in der allgemeinen Form eines rechteckigen Dreiecks aufweist.

3. Landfahrzeug, **dadurch gekennzeichnet, dass** es mindestens eine Absorptionsvorrichtung (DA) nach einem der vorhergehenden Ansprüche umfasst.

4. Fahrzeug nach Anspruch 3, **dadurch gekennzeichnet, dass** es einen vorderen Teil mit der Absorptionsvorrichtung (DA) umfasst.

5. Fahrzeug nach Anspruch 4, **dadurch gekennzeichnet, dass** der vordere Teil zwei optische Blöcke (BO) umfasst, die jeweils oberhalb der beiden gegenüberliegenden Enden (Ej) des Querträgers (TA) der Absorptionsvorrichtung (DA) angeordnet sind.

6. Fahrzeug nach Anspruch 5, **dadurch gekennzeichnet, dass** jeder der optischen Blöcke (BO) eine fotometrische Tagfahrlichtfunktion bereitstellt.

7. Fahrzeug nach einem der Ansprüche 3 bis 6, **dadurch gekennzeichnet, dass** es vom Typ Kraftfahrzeug ist.

## Claims

1. Absorption device (DA) for equipping a vehicle and comprising a cross-member (TA) comprising opposite ends (Ej) to which are secured by welding and respectively bent outer plates (PEj) and each having an upper part (PS) extending beyond an upper face (FS) of the corresponding end (Ej), each upper part (PS) being folded over said upper face (FS) of the corresponding end (Ej) and comprising an edge (BP) secured to this upper face (FS) by at least one weld bead (CS) spaced by report from a front face (FV) of said corresponding end (Ej) in order to reduce its stress in the event of impact, wherein each edge (BP) is secured to said upper face (FS) by two weld beads (CS) spaced apart from each other, each upper part (PS) comprises two sub-parts (SP) separated by a cutout (DP) facilitating their folding over said upper face (FS) of the corresponding end (Ej), and in that said edge (BP) of each sub-part (SP) is secured to said upper face (FS) by one of said weld beads (CS).

2. Device according to claim 1, **characterised in that** each weld bead (CS) has a cross-section in the general shape of a right-angled triangle.

3. Land vehicle, comprising at least one absorption device according to one of the previous claims.

4. Vehicle according to claim 3, **characterised in that** it comprises a front part comprising said absorption device (DA).

5. Vehicle according to claim 4, **characterised in that** said front part comprises two optical units (BO) installed respectively above said two opposite ends (Ej) of the cross-member (TA) of said absorption device (DA).

6. Vehicle according to claim 5, **characterised in that** each of said optical units (BO) performs a photometric function of a daytime running light.

7. Vehicle according to one of Claims 3 to 6, **characterised in that** it is of the automobile type.
